# EUROPEAN PATENT APPLICATION

(11) **EP 2 512 057 A2**
(43) Date of publication of application: **17.10.2012**
(21) Application number: 12163570.0
(22) Date of filing: 10.04.2012
(51) Int. Cl.: H04L 1/00

(54) **VOICE COMMUNICATION APPARATUS AND METHOD**

(30) Priority: 12.04.2011 KR 20110033705
(71) Applicant: Electronics and Telecommunications Research Institute, Daejeon-city 305-350 (KR)
(72) Inventor: Son, Young-Ho, 305-390 Daejeon (KR); Yoon, Jang-Hong, 305-390 Daejeon (KR)
(74) Representative: Betten & Resch

(57) **Abstract**

Disclosed herein is a voice transmission apparatus. The voice transmission apparatus includes a voice input unit, an Analog-to-Digital (AD) converter, a transmission synchronization unit, a channel status determination unit, and a transmission unit. The voice input unit receives an analog voice signal corresponding to a communication session. The AD converter converts the analog voice signal into a digital signal. The transmission synchronization unit generates a transmission target signal by respectively assigning a start identifier and an end identifier to the first frame and final frame of the digital signal corresponding to the communication session. The channel status determination unit determines the status of a channel. The transmission unit transmits the transmission target signal over the channel in such a way that the transmission rate of the transmission target signal is set on a communication session basis depending on the status of the channel.

## Description

### CROSS REFERENCE TO RELATED APPLICATION

This application claims the benefit of Korean Patent Application No. 10-2011-0033705, filed on April 12, 2011, which is hereby incorporated by reference in its entirety into this application.

### BACKGROUND OF THE INVENTION

### 1. Technical Field

The present invention relates generally to a voice communication apparatus and method and, more particularly, to a technology that enables user voice information to be smoothly transmitted in an inadequate channel environment in which it is difficult to transmit user voice, and that enables the user voice information to be safely protected from illegal access on a communication line.

### 2. Description of the Related Art

Generally, a communication apparatus includes a transmitter, a receiver, and a transmission channel.

The transmitter modulates user information, and then transmits the modulated user information over so-called carrier waves at a high frequency.

The modulated transmission signal is transmitted to a receiving end over a transmission channel which has various types of routes formed of media such as air, an electric wire, and optical fiber.

In the order reverse to that of the transmitter, the receiver demodulates the information signal carried on the carrier wave, and restores the information signal to a desired information signal.

Meanwhile, when voice data is transmitted, errors inevitably occur due to noise, interference, or fading depending on the status of a channel, so that the loss of information data occurs because of the occurred errors.

In order to reduce the loss of information data attributable to the occurrence of errors, various types of error control schemes have been employed depending on the characteristics of the channel.

Furthermore, there is a case where the Bit Error Ratio (BER) is so high that it is impossible to perform voice communication, depending on the time and place when and where the communication is performed over a shortwave channel. Although voice encoders, which highly compress user voice signals at a low transmission rate for the purpose of voice communication over such an inadequate channel, and modems, which are optimized for transmission over the corresponding channel, have been developed, voice signals are encoded at a low transmission rate, so that there are some limits to voice communication because of the deterioration of call quality and a transmission rate which is relatively higher than a high BER.

### SUMMARY OF THE INVENTION

Accordingly, the present invention has been made keeping in mind the above problems occurring in the prior art, and an object of the present invention is to ensure reliable transmission and excellent call quality by protecting user voice signals in an end-to-end manner even in an inadequate channel environment in which a Bit Error Ratio (BER) is high.

Another object of the present invention is to protect communication information from an illegal wiretap over a channel by encrypting and decrypting user voice signals using a unique method.

In order to accomplish the above objects, the present invention provides a voice transmission apparatus including a voice input unit for receiving an analog voice signal corresponding to a communication session; an Analog-to-Digital (AD) converter for converting the voice signal into a digital signal; a transmission synchronization unit for generating a transmission target signal by respectively assigning a start identifier and an end identifier to the first frame and final frame of the digital signal corresponding to the communication session; a channel status determination unit for determining the status of a channel over which the transmission target signal is transmitted; and a transmission unit for transmitting the transmission target signal over the channel in such a way that the transmission rate of the transmission target signal is set on a communication session basis depending on the status of the channel. That is, the transmission rate of the transmission target signal may be decided for every communication session.

The transmission unit may set the transmission rate to a value lower than the bit rate of the transmission target signal. For example, the transmission rate may be lower than the encoding rate of a voice encoder. In this case, the receiver (the voice reception apparatus) may decode the signal demodulated by a modem with a decoding rate corresponding to the encoding rate of the voice encoder in the transmitter (the voice transmission apparatus).

The voice transmission apparatus may further include an encoding unit for compressing the digital signal obtained through conversion performed by the AD converter.

The voice transmission apparatus may further include an encryption unit for generating the transmission target signal, compressed using the encoding unit, as an encrypted signal based on an encryption algorithm.

The encryption algorithm may be used for performing a bitwise exclusive OR operation on the transmission target signal using a random number sequence.

The transmission unit may perform one or more of channel coding and interleaving on the transmission target signal.

The voice transmission apparatus may perform communication using a half-duplex method.

In order to accomplish the above objects, the present invention provides a voice reception apparatus including a reception unit for receiving a reception target signal from a channel in such a way that the reception rate of a reception target signal is set to be slower than the bit rate of the reception target signal on a communication session basis depending on status of a channel; a detection unit for detecting a start identifier and an end identifier which are respectively assigned to the first frame and final frame of the reception target signal; a reception completion determination unit for storing the reception target signal corresponding to the communication session, which ranges from the detected first frame of the start identifier to the detected final frame of the end identifier, and determining completion of reception of the reception target signal corresponding to the communication session; a Digital-to-Analog (DA) converter for converting the reception target signal into an analog voice signal; and a voice output unit for outputting the analog voice signal.

The reception unit may set the reception rate to a value lower than the bit rate of the reception target signal.

The voice reception apparatus may further includes a decoding unit for decoding the reception target signal at a speed corresponding to the bit rate, and generating a decryption target signal.

The reception unit may perform one or more of deinterleaving and channel decoding on the reception target signal, thereby demodulating the reception target signal into the decryption target signal.

The voice reception apparatus may further include a decryption unit for generating a decrypted signal corresponding to an encrypted signal based on a decryption algorithm.

The decryption algorithm may be used for performing a bitwise exclusive OR operation on the decryption target signal using a random number sequence.

The voice reception apparatus may perform communication using a half-duplex method.

In order to accomplish the above objects, the present invention provides a voice transmission method including receiving an analog voice signal corresponding to a communication session using a voice input unit; converting the voice signal into a digital signal using an AD converter, generating a transmission target signal by respectively assigning a start identifier and an end identifier to the first frame and final frame of the digital signal corresponding to the communication session using a transmission synchronization unit; determining the status of a channel over which the transmission target signal is transmitted using a channel status determination unit; and transmitting the transmission target signal over the channel in such a way that the transmission rate of the transmission target signal is set on a communication session basis depending on the status of the channel using a transmission unit.

The transmitting the transmission target signal over the channel may include setting the transmission rate to a value lower than the bit rate of the transmission target signal.

The voice transmission method may further include, after converting the voice signal into the digital signal, compressing the digital signal using an encoding unit; and generating the compressed transmission target signal as an encrypted signal based on an encryption algorithm using an encryption unit.

The generating as the encrypted signal may include using an encryption algorithm to perform a bitwise exclusive OR operation on the transmission target signal using a random number sequence.

The transmitting the transmission target signal over the channel may include performing one or more of channel coding and interleaving on the transmission target signal, thereby modulating the transmission target signal.

The voice transmission method may include performing communication using a half-duplex method.

In order to accomplish the above objects, the present invention provides a voice reception method including receiving a reception target signal from a channel in such a way that the reception rate of a reception target signal is set to a value lower than the bit rate of the reception target signal on a communication session basis depending on the status of a channel using a reception unit; detecting a start identifier and an end identifier which are respectively assigned to the first frame and final frame of the reception target signal using a detection unit; storing the reception target signal corresponding to the communication session, which ranges from the detected first frame of the start identifier to the detected final frame of the end identifier, and determining the completion of reception of the reception target signal corresponding to the communication session using a reception completion determination unit; converting the reception target signal into an analog voice signal using a DA converter; and outputting the analog voice signal using a voice output unit.

The receiving the reception target signal form the channel may include setting the reception rate to a value lower than the bit rate of the reception target signal.

The receiving the reception target signal from the channel may include performing one or more of deinterleaving and channel decoding on the reception target signal, thereby demodulating the reception target signal into a decryption target signal.

The voice reception method may further include, after the receiving the reception target signal from the channel, generating a decrypted signal corresponding to an encrypted signal based on the decryption algorithm using the decryption unit.

The generating the decrypted signal may include performing a decryption algorithm used for performing bitwise exclusive OR operation on the decoding target signal using a random number sequence.

The voice reception method may include performing communication using a half-duplex.

According to the present invention, there is the advantage of ensuring reliable transmission and excellent call quality by protecting user voice signals in an end-to-end manner even in an inadequate channel environment in which the BER is high.

Furthermore, the present invention has the advantage of protecting communication information from an illegal wiretap over a channel by encrypting and decrypting user voice signals using a unique method.

### BRIEF DESCRIPTION OF THE DRAWINGS

The above and other objects, features and advantages of the present invention will be more clearly understood from the following detailed description taken in conjunction with the accompanying drawings, in which:

FIG. 1 is a diagram illustrating the overall configuration of a voice communication apparatus according to an embodiment of the present invention;

FIG. 2 is a diagram illustrating the detailed configuration of the voice transmission apparatus of FIG. 1;

FIG. 3 is a diagram illustrating the detailed configuration of the voice reception apparatus of FIG. 1;

FIG. 4 is a flowchart illustrating a voice transmission method according to an embodiment of the present invention; and

FIG. 5 is a flowchart illustrating a voice reception method according to an embodiment of the present invention.

### DESCRIPTION OF THE PREFERRED EMBODIMENTS

Hereinafter, in order to describe the technical spirit of the present invention in detail so as to enable those skilled in the art to readily practice the present invention, embodiments of the present invention will be described in detail below with reference to the accompanying drawings. First, it should be noted that the same reference numerals are used for designating the same or similar components throughout the drawings. Furthermore, in the following description of the present invention, detailed descriptions of related well-lrnown configurations or functions will be omitted.

A voice communication apparatus and method according to the embodiments of the present invention will be described in detail below with reference to the accompanying drawings.

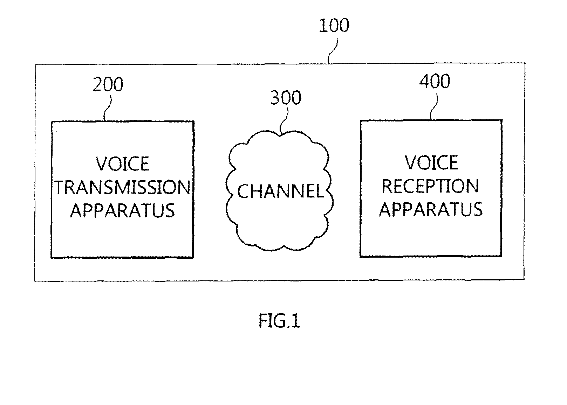

FIG. 1 is a diagram illustrating the entire configuration of a voice communication apparatus according to an embodiment of the present invention.

Referring to FIG. 1, a voice communication apparatus 100 includes a voice transmission apparatus 200, a channel 300, and a voice reception apparatus 400.

The voice communication apparatus 100 can provide a reliable voice communication function using a half-duplex communication method even in inadequate channel status in which it is difficult to actually make a voice call, and can protect a user voice signal from the illegal access of a third person over the channel 300 by encrypting and decrypting the user voice signal.

The voice transmission apparatus 200 of the voice communication apparatus 100 converts the voice signal into a digital signal, compresses the digital signal using a voice encoder, respectively assigns a start identifier and an end identifier to the first frame and final frame of the digital signal, and then encrypts the resulting digital signal. Thereafter, the voice transmission apparatus transmits the voice signal over the channel 300 at a speed which is slower than a bit rate such that transmission can be reliably performed even in an inadequate channel environment.

The channel 300 of the voice communication apparatus 100 is a connection medium which transmits the voice signal encrypted by the voice transmission apparatus 200 to the voice reception apparatus 400 in order to smoothly perform communication between the voice transmission apparatus 200 and the voice reception apparatus 400.

The voice reception apparatus 400 of the voice communication apparatus 100 presets a transmission rate which is the same as that of the voice transmission apparatus 200, decrypts and restores the voice signal from the channel 300, and then outputs the resulting voice signal to be played back to a user.

Therefore, it is preferable that the voice transmission apparatus 200 and voice reception apparatus 400 of the voice communication apparatus 100 chiefly communicate in digital voice.

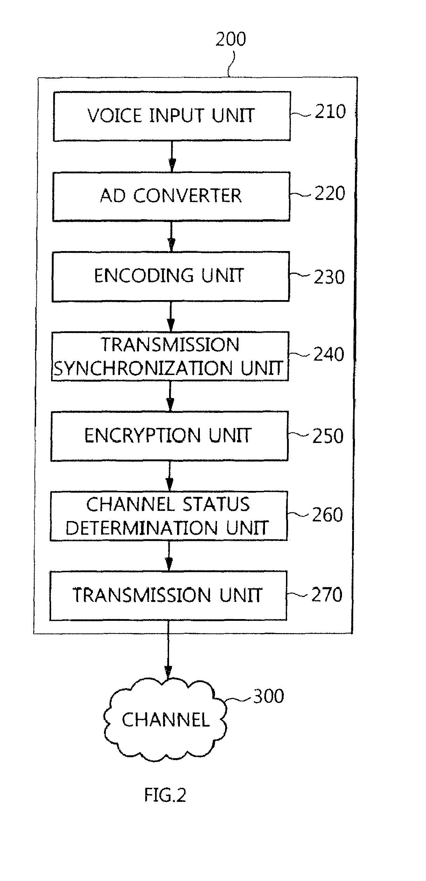

FIG. 2 is a diagram illustrating the detailed configuration of the voice transmission apparatus of FIG. 1.

Referring to FIG. 2, the voice transmission apparatus 200 includes a voice input unit 210, an Analog-to-Digital (AD) converter 220, an encoding unit 230, a transmission synchronization unit 240, an encryption unit 250, a channel status determination unit 260, and a transmission unit 270.

The voice input unit 210 receives an analog voice signal corresponding to a communication session after a Push-To-Talk (PTT) button is pressed.

Here, the communication session refers to duration between the pressing and releasing of the PTT button.

The AD converter 220 receives the voice signal which is input via the voice input unit 210, and converts the voice signal into a digital signal which is digitized using a Pulse Code Modulation (PCM) method.

The encoding unit 230 converts the PCM signal, obtained through the conversion performed by the AD converter 220, into a signal at a lower bit rate by performing a compression process using a voice encoder provided in the encoding unit 230, thereby reducing a transmission bandwidth.

The transmission synchronization unit 240 generates a transmission target signal by respectively assigning a start identifier and an end identifier to the first frame and final frame of the digital signal corresponding to the communication session in order to determine the start or end of the digital signal compressed using the encoding unit 230.

The encryption unit 250 generates an encrypted signal by encrypting the transmission target signal based on an encryption algorithm which is used for performing a bitwise exclusive OR operation using a random number sequence.

Here, the encryption target signal corresponds to the transmission target signal generated by the transmission synchronization unit 240.

The channel status determination unit 260 determines the status of the channel of the voice reception apparatus 400 over which the transmission target signal will be transmitted.

The transmission unit 270 transmits the encrypted signal over the channel in such a way that the transmission rate of the encrypted signal generated by the encryption unit 250 is set to a value lower than the bit rate of the transmission target signal.

Here, the transmission unit 270 performs one or more processes of channel coding and interleaving on the encrypted signal, thereby modulating the encrypted signal suitable for the status of the channel in order to reliably transmit transmission data even over an inadequate channel in which the BER of the channel 300 is high.

That is, it means that the transmission unit 270 transmits the encrypted signal at a speed lower than the bit rate of the transmission target signal for a longer time when the status of the channel is inadequate.

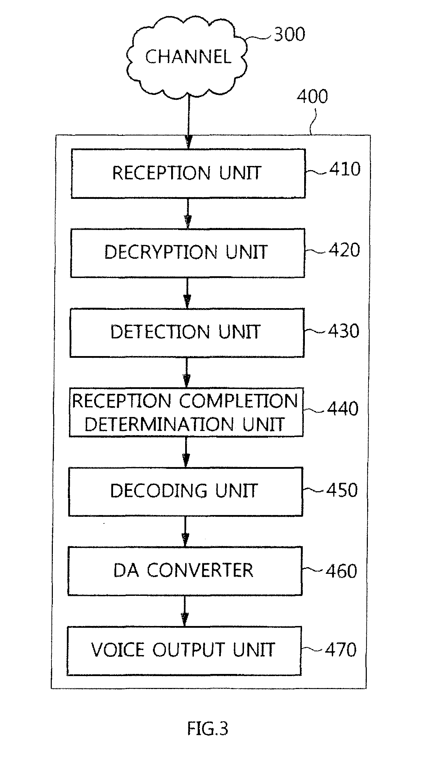

FIG. 3 is a diagram illustrating the detailed configuration of the voice reception apparatus of FIG. 1.

Referring to FIG. 3, an operation method performed by the voice reception apparatus 400 of the voice communication apparatus 100 will be described using an example of a half-duplex communication method as described below.

The voice reception apparatus 400 includes a reception unit 410, a decryption unit 420, a detection unit 430, a reception completion determination unit 440, a decoding unit 450, a Digital-to-Analog (DA) converter 460, and a voice output unit 470.

The reception unit 410 sets the transmission rate of a reception target signal on a communication session basis depending on the status of the channel, receives the encrypted signal, generated by the voice transmission apparatus 200, from the channel 300, and demodulates the encrypted signal.

Here, the reception target signal corresponds to the encrypted signal generated by the voice transmission apparatus 200.

The decryption unit 420 generates a compressed decrypted signal (the decoding target signal of the voice encoder) by decrypting a decryption target signal (received encrypted signal) demodulated by the reception unit 410 based on a decryption algorithm that is used for performing a bitwise exclusive OR operation on the transmission target signal (encryption target signal) adapted to the encryption unit 250 of the voice transmission apparatus 200 using a random number sequence.

The detection unit 430 sequentially stores the decrypted signal in order to detect the start and end of the compressed reception target signal from the decrypted signal.

That is, the detection unit 430 detects the start identifier and the end identifier which are respectively assigned to the first frame and final frame of the reception target signal.

The reception completion determination unit 440 starts buffering after detecting the initial voice frame and the start identifier which are detected by the detection unit 430, or regularly stores all reception target signals which are received from the voice transmission apparatus 200 during a single communication session after detecting a final voice frame and an end identifier.

Here, the reception completion determination unit 440 starts to store the reception target signal when the start identifier is detected, terminates the storing of the reception target signal when the end identifier is detected, and then determines the completion of the reception.

The decoding unit 450 inputs the compressed reception target signal, the detection of which was completed by the detection unit 430 and which was stored in a buffer, to the decoder of the voice encoder, and generates a PCM signal.

The DA converter 460 converts the PCM signal, obtained through conversion performed by the decoding unit 450, into an analog voice signal.

The voice output unit 470 outputs the analog voice signal obtained through the conversion performed by the DA converter 460.

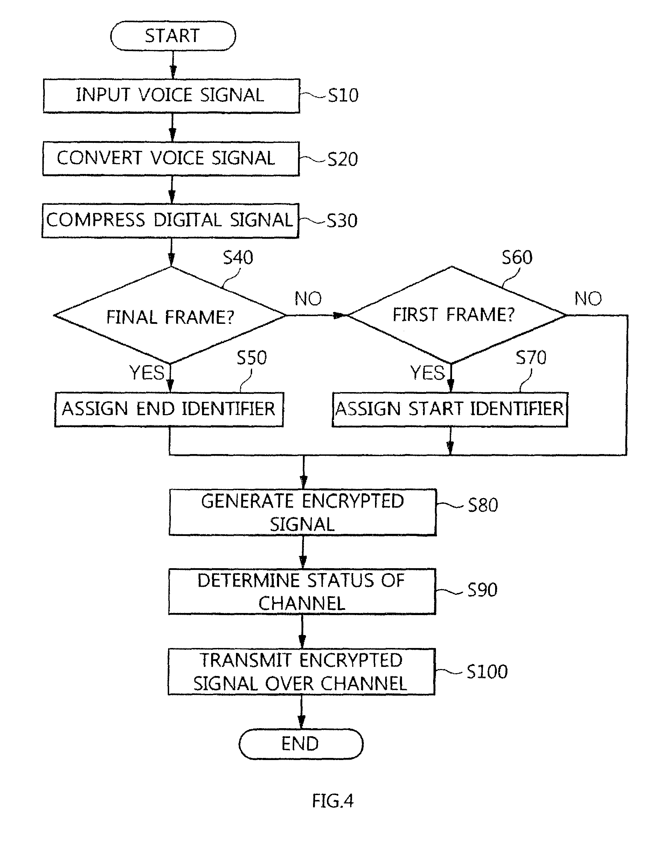

FIG. 4 is a flowchart illustrating a transmission method according an embodiment of the present invention.

Referring to FIG. 4, the voice transmission method of the voice communication method will be described using an example of a half-duplex communication method as described below.

First, after a PTT button is pressed using the voice input unit 210, an analog voice signal corresponding to a communication session is received at step S 10.

Thereafter, the analog voice signal is converted into a digital signal, which is digitized using a PCM method, using the AD converter 220 at step S20.

Thereafter, the digital signal is compressed using the encoding unit 230 at step S30, so that transmission bandwidth is reduced.

That is, when the PTT button is pressed and communication starts, the input voice signal is input to the transmission synchronization unit 240 on a predetermined frame basis via the voice input unit 210, the AD converter 220, and the encoding unit 230.

Thereafter, in order to determine the end of the compressed digital signal using the transmission synchronization unit 240, a start identifier and an end identifier are respectively assigned to the first frame and final frame of the digital signal corresponding to the communication session, so that a transmission target signal is generated.

The transmission synchronization unit 240 determines whether the transmission target signal is a final voice frame which is finally input when the communication ends at step S40.

In the case of the final frame, the end identifier is assigned to the end of the transmission target signal at step S50, and then the transmission target signal, to which the end identifier was assigned, is input to the encryption unit 250.

Further, in the case of no final frame, it is determined whether the transmission target signal corresponds to a frame which was initially received after the communication started at step S60.

In the case of the first frame, a start identifier is assigned to the head of the transmission target signal at step S70, and then the transmission target signal, to which the start identifier is assigned, is input to the encryption unit 250.

Further, in the case of no first frame, the corresponding transmission target signal is input to the encryption unit 250 without being subjected to a separate process.

Thereafter, the transmission target signal which was input to the encryption unit 250 is encrypted based on the encryption algorithm which is used for performing a bitwise exclusive OR operation using a random number sequence, and then the encrypted transmission target signal is generated as an encrypted signal at step S80.

Thereafter, the status of a channel, over which the encrypted signal is transmitted using the channel status determination unit 260, is determined at step S90.

Thereafter, the transmission rate of the transmission target signal is set on a communication session basis depending on the status of the channel, and the encrypted signal is transmitted over the channel using the transmission unit 270.

Here, the transmission unit 270 performs one or more processes of channel coding and interleaving on the encrypted signal, thereby modulating the encrypted signal suitable for the status of the channel in order to reliably transmit transmission data even over an inadequate channel in which the BER of the channel 300 is high.

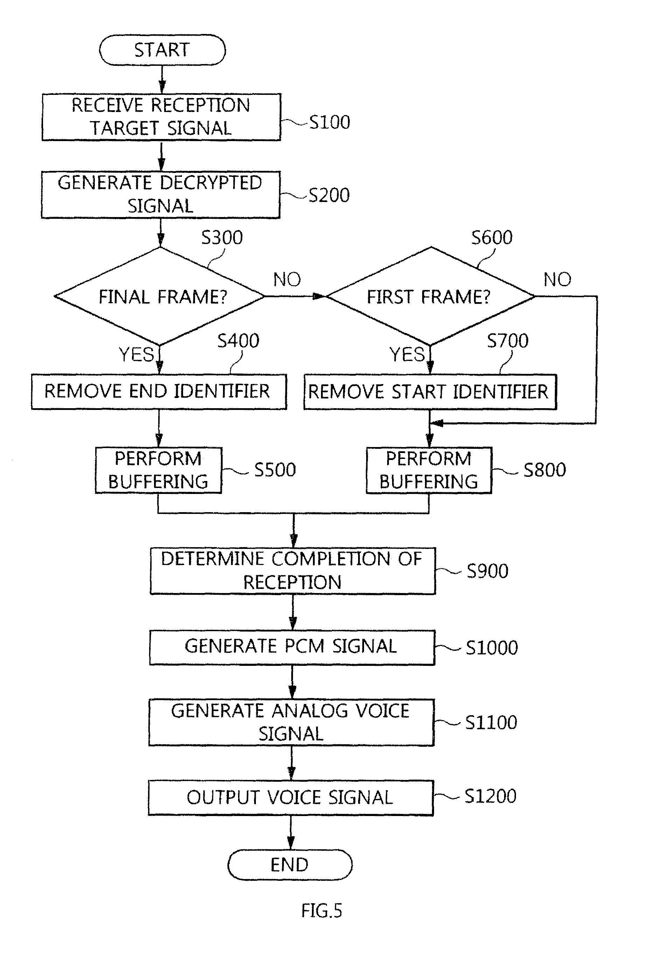

FIG. 5 is a flowchart illustrating a voice reception method according to an embodiment of the present invention.

Referring to FIG. 5, the voice reception method of the voice communication method will be described using an example of a half-duplex communication method as described below.

First, the reception unit 410 sets the transmission rate of a reception target signal on a communication session basis depending on the status of the channel, and receives the reception target signal from the channel 300 at step S 100.

Here, the transmission rate of the reception target signal is set to a value lower than the bit rate of the reception target signal.

Further, the reception unit 410 demodulates the reception target signal into a decryption target signal (received encrypted signal) by performing one or more processes of deinterleaving and channel decoding on the reception target signal.

Thereafter, the decryption unit 420 adapts the demodulated decryption target signal to the encryption unit of the voice transmission apparatus 200, and performs the bitwise exclusive OR which is a decryption algorithm and which uses a random number sequence, thereby generating a decrypted signal at step S200.

Thereafter, the detection unit 430 detects the start identifier and the end identifier which are respectively assigned to the first frame and final frame of the decrypted signal (the reception target signal).

Here, a method of detecting the identifiers is performed by detecting whether the end identifier, which is subsequent to the final frame and is additionally transmitted from the voice transmission apparatus 200, exists.

If the end identifier is detected at step S300, the end identifier is removed at step S400.

Thereafter, the reception completion determination unit 440 stores the decrypted signal corresponding to the communication session at step S500. The order of buffering is determined such that the signal is subsequent to a previously stored frame.

Further, if the decrypted signal which was input to the detection unit 430 is not the final frame but the first frame at step S600, the start identifier is removed at step S700.

Thereafter, the reception completion determination unit 440 stores the decrypted signal corresponding to the communication session at step S800.

Here, the decrypted signal is initially stored during the corresponding communication session.

Further, if the decrypted signal is not the first frame, the compressed reception target signal is input to the decryption unit 420 without being subjected to particular processing, and is then stored in a buffer after the previous flame.

Thereafter, if a new decrypted signal is input, the above-described process is repeated until before the end identifier is detected, and then the completion of the reception is determined at step S900.

Thereafter, the decoding unit 450 generates the buffered decrypted signal (compressed reception data) in the form of a PCM signal using the decoder of the voice encoder provided in the decoding unit at step S 1000.

Thereafter, the DA converter 460 converts the restored target signal into an analog voice signal at step S1100.

Thereafter, the voice output unit 470 outputs the analog voice signal obtained through conversion performed by the DA converter 460 at step S 12000.

Therefore, according to the present invention, the output of analog voice signals via the voice reception apparatus 400 is performed in batch after all digital voice signals transmitted from the voice transmission apparatus 200 have been received by the voice reception apparatus.

Especially, the present invention may be very useful in extremely high BER circumstances in which the voice communication is impossible. The present invention may make the voice communication possible in the extremely high BER circumstances by deciding the transmission rate in every transmission session.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A voice transmission apparatus, comprising:
a voice input unit for receiving an analog voice signal corresponding to a communication session;
an Analog-to-Digital (AD) converter for converting the analog voice signal into a digital signal;
a transmission synchronization unit for generating a transmission target signal by respectively assigning a start identifier and an end identifier to a first frame and a final frame of the digital signal corresponding to the communication session;
a channel status determination unit for determining a status of a channel over which the transmission target signal is transmitted; and
a transmission unit for setting a transmission rate of the transmission target signal in a unit of the communication session according to the status of the channel to transmit the transmission target signal over the channel.

2. The voice transmission apparatus as set forth in claim 1, wherein the transmission unit sets the transmission rate to a value lower than a bit rate of the transmission target signal.

3. The voice transmission apparatus as set forth in claim 1 or 2, further comprising an encoding unit for compressing the digital signal obtained through conversion performed by the AD converter.

4. The voice transmission apparatus as set forth in claim 3, further comprising:
an encryption unit for generating the transmission target signal, compressed using the encoding unit, as an encrypted signal based on an encryption algorithm.

5. The voice transmission apparatus as set forth in claim 4, wherein the encryption algorithm is used for performing a bitwise exclusive OR operation on the transmission target signal using a random number sequence.

6. The voice transmission apparatus as set forth in one of claims 1 to 5, wherein the transmission unit performs one or more of channel coding and interleaving on the transmission target signal, thereby modulating the transmission target signal depending on a transmission band.

7. The voice transmission apparatus as set forth in one of claims 1 to 6, wherein the voice transmission apparatus performs communication using a half-duplex method.

8. A voice reception apparatus, comprising:
a reception unit for receiving a reception target signal from a channel in such a way that a reception rate of a reception target signal is set to a value lower than a bit rate of the reception target signal in a unit of a communication session according to status of a channel;
a detection unit for detecting a start identifier and an end identifier which are respectively assigned to a first frame and a final frame of the reception target signal;
a reception completion determination unit for storing the reception target signal corresponding to the communication session, which ranges from the detected first frame of the start identifier to the detected final frame of the end identifier, and determining completion of reception of the reception target signal corresponding to the communication session;
a Digital-to-Analog (DA) converter for converting the reception target signal into an analog voice signal; and
a voice output unit for outputting the analog voice signal.

9. The voice reception apparatus as set forth in claim 8, wherein the reception unit performs one or more of deinterleaving and channel decoding on the reception target signal, thereby demodulating the reception target signal into a decryption target signal.

10. The voice reception apparatus as set forth in claim 8 or 9, further comprising a decryption unit for generating a decrypted signal corresponding to an encrypted signal based on a decryption algorithm.

11. The voice reception apparatus as set forth in claim 10, wherein the decryption algorithm is used for performing a bitwise exclusive OR operation on the decryption target signal using a random number sequence.

12. A voice transmission method, comprising:
receiving an analog voice signal corresponding to a communication session;
converting the analog voice signal into a digital signal using an AD converter;
generating a transmission target signal by respectively assigning a start identifier and an end identifier to a first frame and a final frame of the digital signal corresponding to the communication session;
determining a status of a channel over which the transmission target signal is transmitted; and
setting a transmission rate of the transmission target signal in a unit of the communication session according to the status of the channel to transmit the transmission target signal over the channel.

13. The voice transmission method as set forth in claim 12, wherein the transmitting the transmission target signal over the channel includes setting the transmission rate to a value lower than a bit rate of the transmission target signal.

14. The voice transmission method as set forth in claim 12 or 13, further comprising, after converting the voice signal into the digital signal,
compressing the digital signal using an encoding unit; and
generating the compressed transmission target signal as an encrypted signal based on an encryption algorithm using an encryption unit.

15. The voice transmission method as set forth in claim 12, 13 or 14, wherein the voice transmission method performs communication using a half-duplex method.
